# EUROPEAN PATENT APPLICATION

(11) **EP 4 510 231 A1**
(43) Date of publication of application: **19.02.2025**
(21) Application number: 23820080.2
(22) Date of filing: 07.06.2023
(51) Int. Cl.: H01M 4/525, H01M 4/505, H01M 4/131, H01M 10/0525, C01G 53/00, H01M 4/02

(54) **METHOD FOR PREPARING POSITIVE ELECTRODE ACTIVE MATERIAL AND POSITIVE ELECTRODE ACTIVE MATERIAL**

(30) Priority: 07.06.2022 KR 20220069033
(71) Applicant: LG Chem, Ltd., Yeongdeungpo-gu Seoul 07336 (KR)
(72) Inventor: HA, Seoung Chul, Daejeon 34122 (KR); LEE, Seong Min, Daejeon 34122 (KR); YOU, Min Kyu, Daejeon 34122 (KR); LEE, June Woo, Daejeon 34122 (KR); LEE, Kyung Lok, Daejeon 34122 (KR); SHIN, Ji A, Daejeon 34122 (KR); HEO, Un Seon, Daejeon 34122 (KR); DO, Joong Yeop, Daejeon 34122 (KR)
(74) Representative: Hoffmann Eitle
(86) International application number: PCT/KR2023/007731
(87) International publication number: WO 2023/239144

(57) **Abstract**

The present invention relates to a method for preparing a positive electrode active material and a positive electrode active material, and relates to a method for preparing a positive electrode active material, and a positive electrode active material prepared by the preparation method, the method comprising the steps of: (A) adding, into a reactor, a solution containing at least one transition metal selected from nickel, cobalt, and manganese, a zirconium-containing raw material, an ammonium cationic complexing agent, and a basic solution and subjecting same to a coprecipitation reaction to thereby prepare a zirconium-containing composite transition metal hydroxide; and (B) mixing the zirconium-containing composite transition metal hydroxide with a lithium-containing raw material and an aluminum-containing raw material and calcining the mixture to thereby prepare a lithium composite transition metal oxide, wherein the lithium composite transition metal oxide comprises at least one selected from nickel, cobalt, and manganese, zirconium, and aluminum.

## Description

### TECHNICAL FIELD

### Cross-reference to Related Applications

This application claims priority from Korean Patent Application No. 10-2022-0069033, filed on June 7, 2022, the disclosure of which is incorporated by reference herein.

### Technical Field

The present invention relates to a method of preparing a positive electrode active material and the positive electrode active material.

### BACKGROUND ART

Recently, in line with the rapid market expansion of electric vehicles, the development of lithium ion batteries is accelerating worldwide. Accordingly, high performance, such as mileage and output, of the electric vehicles is required. Thus, research is being conducted in the direction of increasing a nickel content of a NCM-based lithium composite transition metal oxide which is a main material of a positive electrode active material included in the lithium ion battery. However, since oxidation from Ni²⁺ to Ni³⁺ or Ni⁴⁺ occurs depending on a state of charge as the nickel content is increased, rapid oxygen desorption proceeds and there is a problem in that desorbed oxygen and Ni⁴⁺ cause a side reaction with an electrolyte solution to degrade performance, such as lifetime and resistance, of the battery.

In order to solve this problem, there is a method of doping or coating by mixing a doping raw material or a coating raw material when a positive electrode active material precursor and a lithium-containing raw material are mixed and sintered, but, since it is difficult to control a doping element and a coating element to be uniformly distributed and there is a problem in that various performances of the battery are degraded due to a non-uniform reaction, improvements are required.

### DISCLOSURE OF THE INVENTION

### TECHNICAL PROBLEM

An aspect of the present invention provides a method of preparing a positive electrode active material in which, specifically, there is less zirconium present in an agglomerated state on a surface, and an amount of each of aluminum and zirconium present in the inside is higher than an amount of each of aluminum and zirconium present on the surface.

### TECHNICAL SOLUTION

In order to solve the above-described tasks, the present invention provides a method of preparing a positive electrode active material, the positive electrode active material, a positive electrode, and a lithium secondary battery.
(1) The present invention provides a method of preparing a positive electrode active material which includes steps of: (A) preparing a composite transition metal hydroxide containing zirconium by a co-precipitation reaction while adding a transition metal-containing solution containing at least one selected from nickel, cobalt, and manganese, a zirconium-containing raw material, an ammonium cationic complexing agent, and a basic solution into a reactor; and (B) preparing a lithium composite transition metal oxide by mixing the composite transition metal hydroxide containing zirconium with a lithium-containing raw material and an aluminum-containing raw material and sintering the mixture, wherein the lithium composite transition metal oxide includes zirconium, aluminum, and at least one selected from nickel, cobalt, and manganese.
(2) The present invention provides the method of preparing a positive electrode active material of (1) above, wherein the zirconium-containing raw material is at least one selected from zirconium hydroxide, zirconium sulfate, zirconium acetate, zirconium nitrate, zirconium halide, zirconium sulfide, and zirconium oxyhydroxide.
(3) The present invention provides the method of preparing a positive electrode active material of (1) or (2) above, wherein the zirconium-containing raw material is added such that an amount of the zirconium is 1,000 ppm to 9,000 ppm based on a total weight of the composite transition metal hydroxide containing zirconium.
(4) The present invention provides the method of preparing a positive electrode active material of any one of (1) to (3) above, wherein the aluminum-containing raw material is at least one selected from aluminum hydroxide, aluminum oxide, aluminum sulfate, aluminum acetate, aluminum nitrate, aluminum halide, aluminum sulfide, and aluminum oxyhydroxide.
(5) The present invention provides the method of preparing a positive electrode active material of any one of (1) to (4) above, wherein the aluminum-containing raw material is added such that an amount of the aluminum is 1,000 ppm to 9,000 ppm based on a total weight of the lithium composite transition metal oxide.
(6) The present invention provides the method of preparing a positive electrode active material of any one of (1) to (5) above, wherein the sintering of step (B) is performed at a temperature of 700°C to 800°C.
(7) The present invention provides a positive electrode active material including a lithium composite transition metal oxide which includes zirconium, aluminum, and at least one selected from nickel, cobalt, and manganese, wherein a weight ratio of the aluminum present in inside to the aluminum present on a surface is greater than 1.0, and a weight ratio of the zirconium present in the inside to the zirconium present on the surface is greater than 1.0.
(8) The present invention provides the positive electrode active material of (7) above, wherein the lithium composite transition metal oxide includes the zirconium in an amount of 1,000 ppm to 9,000 ppm based on a total weight.
(9) The present invention provides the positive electrode active material of (7) or (8) above, wherein the lithium composite transition metal oxide includes the aluminum in an amount of 1,000 ppm to 9,000 ppm based on a total weight.
(10) The present invention provides the positive electrode active material of any one of (7) to (9) above, wherein the positive electrode active material has an average particle diameter (D₅₀) of 3 µm to 20 µm.
(11) The present invention provides a positive electrode including the positive electrode active material of any one of (7) to (10) above.
(12) The present invention provides a lithium secondary battery including the positive electrode of (11) above.

### ADVANTAGEOUS EFFECTS

According to a method of preparing a positive electrode active material of the present invention, a positive electrode active material, in which there is less zirconium present in an agglomerated state on a surface, and an amount of each of aluminum and zirconium present in the inside is higher than an amount of each of aluminum and zirconium present on the surface, may be provided.

In addition, the positive electrode active material according to the present invention may improve performance of a battery when used in the battery.

### BRIEF DESCRIPTION OF THE DRAWINGS

FIG. 1(A) is electron probe microanalysis (EPMA) data of a surface of a positive electrode active material of Example 1, and FIG. 1(B) is EPMA data of the inside of the positive electrode active material of Example 1.
FIG. 2(A) is EPMA data of a surface of a positive electrode active material of Comparative Example 1, and FIG. 2(B) is EPMA data of the inside of the positive electrode active material of Comparative Example 1.
FIG. 3(A) is EPMA data of a surface of a positive electrode active material of Comparative Example 4, and FIG. 3(B) is EPMA data of the inside of the positive electrode active material of Comparative Example 4.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

The term "on" in the present specification means not only a case in which one component is formed directly on an upper surface of another component, but also includes a case in which intervening components may also be present.

In the present specification, the expression "average particle diameter (D₅₀)" denotes a particle diameter at 50% of cumulative distribution of volume according to the particle diameter. After dispersing measurement target powder in a dispersion medium, the dispersion medium is introduced into a commercial laser diffraction particle size measurement instrument (e.g., Microtrac S3500), a particle size distribution is calculated by measuring a difference in diffraction patterns due to a particle size when particles pass through a laser beam, and the D₅₀ may be measured by calculating a particle diameter at 50% of the cumulative distribution of volume according to the particle diameter using the measurement instrument.

Hereinafter, the present invention will be described in detail.

### Method of Preparing Positive Electrode Active Material

The present inventors have found that, in a case in which zirconium is first doped when a composite transition metal hydroxide is prepared, since distribution of zirconium in a finally prepared positive electrode active material may not only be controlled, but distribution of aluminum added when sintering is performed may also be controlled, performance of a battery is improved when the positive electrode active material is used in the battery, thereby leading to the completion of the present invention.

Conventionally, when a positive electrode active material was desired to be doped with a doping element, a method of mixing a doping element raw material together and sintering was used in a step of mixing and sintering a composite transition metal hydroxide precursor and a lithium-containing raw material, but the present invention is characterized in that distribution of zirconium may not only be controlled, but distribution of aluminum, which is added in the step of mixing and sintering the precursor and the lithium-containing raw material, may also be controlled by first doping the composite transition metal hydroxide precursor with zirconium, that is, by first doping zirconium during preparation of composite transition metal hydroxide.

The present invention provides a method of preparing a positive electrode active material which includes steps of: (A) preparing a composite transition metal hydroxide containing zirconium by a co-precipitation reaction while adding a transition metal-containing solution containing at least one selected from nickel, cobalt, and manganese, a zirconium-containing raw material, an ammonium cationic complexing agent, and a basic solution into a reactor; and (B) preparing a lithium composite transition metal oxide by mixing the composite transition metal hydroxide containing zirconium with a lithium-containing raw material and an aluminum-containing raw material and sintering the mixture, wherein the lithium composite transition metal oxide includes zirconium, aluminum, and at least one selected from nickel, cobalt, and manganese.

The method of preparing a positive electrode active material according to the present invention may further include a step of: (C) forming a coating layer by mixing a coating element-containing raw material with the lithium composite transition metal oxide and performing a heat treatment.

Hereinafter, each step of the method of preparing a positive electrode active material will be described in more detail.

### Step (A)

The method of preparing a positive electrode active material according to the present invention includes the step of (A) preparing a composite transition metal hydroxide containing zirconium by a co-precipitation reaction while adding a transition metal-containing solution containing at least one selected from nickel, cobalt, and manganese, a zirconium-containing raw material, an ammonium cationic complexing agent, and a basic solution into a reactor.

Step A is a step of nucleation and growth of composite transition metal hydroxide particles, as a positive electrode active material precursor, through a precipitation reaction while adding the transition metal-containing solution, the zirconium-containing raw material, the ammonium cationic complexing agent, and the basic solution into the reactor.

The transition metal-containing solution may contain 60 mol% or more of nickel (Ni) among total metals. The transition metal-containing solution may contain 60 mol% or more, 70 mol% or more, 80 mol% or more, or 85 mol% or more of the nickel (Ni) among the total metals to improve capacity.

The transition metal-containing solution may include at least one selected from a nickel raw material, a cobalt raw material, and a manganese raw material.

The nickel raw material may be nickel-containing acetic acid salts, nitrates, sulfates, halides, sulfides, hydroxides, oxides, or oxyhydroxides, and may specifically be Ni(OH)₂, NiO, NiOOH, NiCO₃ • 2Ni(OH)₂ • 4H₂O, NiC₂O₂ • 2H₂O, Ni(NO₃)₂ • 6H₂O, NiSO₄, NiSO₄ • 6H₂O, Ni(SO₃)₂, or a combination thereof, but the present invention is not limited thereto.

The cobalt raw material may be cobalt-containing acetic acid salts, nitrates, sulfates, halides, sulfides, hydroxides, oxides, or oxyhydroxides, and may specifically be Co(OH)₂, CoOOH, Co(OCOCH₃)₂ • 4H₂O, Co(NO₃)₂ • 6H₂O, CoSO₄, Co(SO₄)₂ • 7H₂O, Co(SO₃)₂, or a combination thereof, but the present invention is not limited thereto.

The manganese raw material may be manganese-containing acetic acid salts, nitrates, sulfates, halides, sulfides, hydroxides, oxides, or oxyhydroxides, and may specifically be Mn₂O₃, MnO₂, Mn₃O₄, MnCO₃, Mn(NO₃)₂, MnSO₄, Mn(SO₃)₂, manganese acetate, manganese dicarboxylate, manganese citrate, a fatty acid manganese salt, a manganese oxyhydroxide, manganese chloride, or a combination thereof, but the present invention is not limited thereto.

The transition metal-containing solution may be prepared by adding at least one selected from a nickel-containing raw material, a cobalt-containing raw material, and a manganese-containing raw material to a solvent, specifically, water, or a mixed solvent of an organic solvent (e.g., alcohol, etc.) which may be uniformly mixed with the water, but the present invention is not limited thereto.

According to the present invention, the zirconium-containing raw material may be at least one selected from zirconium hydroxide, zirconium sulfate, zirconium acetate, zirconium nitrate, zirconium halide, zirconium sulfide, and zirconium oxyhydroxide. The zirconium-containing raw material may specifically be zirconium hydroxide, zirconium sulfate, or a combination thereof, and may more specifically be zirconium sulfate. In this case, zirconium may be co-precipitated with transition metals included in the transition metal-containing solution under the same conditions as those of the transition metals included in the transition metal-containing solution.

According to the present invention, the zirconium-containing raw material may be added such that an amount of zirconium is 1,000 ppm to 9,000 ppm, specifically, 1,000 ppm, 1,500 ppm, 2,000 ppm or more, 7,000 ppm, 8,000 ppm, or 9,000 ppm or less based on a total weight of the composite transition metal hydroxide containing zirconium. In this case, since structural stability of the finally prepared positive electrode active material may be increased, life characteristics may be further improved.

The zirconium-containing raw material may be added by being included in the transition metal-containing solution containing at least one selected from nickel, cobalt, and manganese. That is, the transition metal-containing solution may include zirconium and at least one selected from nickel, cobalt, and manganese.

The ammonium cationic complexing agent, for example, may include NH₄OH, (NH₄)₂SO₄, NH₄NO₃, NH₄Cl, CH₃COONH₄, NH₄CO₃, or a combination thereof, but the present invention is not limited thereto. The ammonium cationic complexing agent may also be used in the form of an aqueous solution, and, in this case, water or a mixture of water and an organic solvent (e.g., alcohol), which may be uniformly mixed with the water, may be used as a solvent.

The basic solution may include a hydroxide of an alkali metal or an alkaline earth metal, such as NaOH, KOH, or Ca(OH)₂, a hydrate thereof, or an alkaline compound of a combination thereof, as a precipitant. The basic solution may also be used in the form of an aqueous solution, and, in this case, water or a mixture of water and an organic solvent (e.g., alcohol), which may be uniformly mixed with the water, may be used as a solvent.

The transition metal-containing solution, the zirconium-containing raw material, the ammonium cationic complexing agent, and the basic solution may be continuously added into the reactor.

The co-precipitation reaction may be performed in an inert atmosphere. For example, the co-precipitation reaction may be performed after nitrogen gas is purged into the reactor to remove dissolved oxygen.

The co-precipitation reaction may be performed at a pH of 12.0 to 13.0, particularly 12.0 to 12.5, and more particularly 12.0 to 12.2, in order to make a particle size of the composite transition metal hydroxide small and uniform.

The co-precipitation reaction may be performed at a temperature of 40°C to 60°C, particularly 45°C to 55°C, and more particularly 48°C to 52°C. In a case in which the co-precipitation reaction is performed at a temperature within the above range, since energy required for the co-precipitation reaction may be provided, a smooth co-precipitation reaction may occur.

The co-precipitation reaction may be performed for 25 hours, 35 hours, 45 hours or more, 60 hours, 70 hours, or 80 hours or less. In this case, uniform particles may be formed.

As a result, the composite transition metal hydroxide prepared according to step (A) may have a composition represented by Formula 1 below.

[Formula 1] Niₐ₁Co_{b1}Mn_{c1}Zr_{d1}M¹ₑ₁(OH)₂

In Formula 1,
M¹ is at least one selected from boron (B), tungsten (W), magnesium (Mg), cerium (Ce), hafnium (Hf), tantalum (Ta), lanthanum (La), titanium (Ti), strontium (Sr), barium (Ba), cerium (Ce), hafnium (Hf), fluorine (F), phosphorus (P), sulfur (S), and lanthanum (La), and
0.60≤a1<1.0, 0<b1≤0.40, 0<c1≤0.40, 0<d1≤0.10, 0≤e1≤0.10, and a1+b1+c1+d1+e1=1.
a1 represents an atomic fraction of nickel among metallic elements in the composite transition metal hydroxide, wherein a1 may be 0.60, 0.70, 0.80, 0.85 or more, 0.95, or 0.98 or less.
b1 represents an atomic fraction of cobalt among the metallic elements in the composite transition metal hydroxide, wherein b1 may be 0.01, 0.02, 0.03 or more, 0.10, 0.30, or 0.40 or less.
c1 represents an atomic fraction of manganese among the metallic elements in the composite transition metal hydroxide, wherein c1 may be 0.01, 0.02, 0.03 or more, 0.10, 0.30, or 0.40 or less.
d1 represents an atomic fraction of zirconium among the metallic elements in the composite transition metal hydroxide, wherein d1 may be greater than 0, 0.01 or more, 0.02, 0.05, or 0.10 or less.
e1 represents an atomic fraction of element M¹ among the metallic elements in the composite transition metal hydroxide, wherein e1 may be 0, 0.01 or more, 0.02, 0.05, or 0.10 or less.

In a case in which the transition metal-containing solution further includes ions of the element M¹, the transition metal-containing solution may be prepared by adding an M¹ element-containing raw material to the solvent together.

### Step (B)

The method of preparing a positive electrode active material according to the present invention includes the step of (B) preparing a lithium composite transition metal oxide by mixing the composite transition metal hydroxide containing zirconium with a lithium-containing raw material and an aluminum-containing raw material and sintering the mixture. In this case, the lithium composite transition metal oxide includes zirconium, aluminum, and at least one selected from nickel, cobalt, and manganese.

According to the present invention, since the composite transition metal hydroxide contains zirconium, distribution of aluminum in the lithium composite transition metal oxide prepared through the sintering of step (B) may be controlled and the prepared lithium composite transition metal oxide may have a weight ratio of aluminum present in inside to aluminum present on a surface of greater than 1.0 and a weight ratio of zirconium present in the inside to zirconium present on the surface of greater than 1.0. Accordingly, initial resistance (initial direct current internal resistance (DCIR)) characteristics, life characteristics, and thermal stability of a battery including the positive electrode active material prepared according to the present invention may all be improved. The surface may be a region within 1 µm from the outermost portion of the lithium composite transition metal oxide.

The lithium-containing raw material may be lithium-containing carbonates (e.g., lithium carbonate, etc.), hydrates (e.g., lithium hydroxide hydrate (LiOH·H₂O), etc.), hydroxides (e.g., lithium hydroxide, etc.), nitrates (e.g., lithium nitrate (LiNO₃), etc.), or chlorides (e.g., lithium chloride (LiCl), etc.).

The aluminum-containing raw material is added to improve the initial resistance characteristics, life characteristics, and thermal stability of the battery, and the aluminum-containing raw material may be aluminum-containing acetate, nitrate, sulfate, halide, sulfide, hydroxide, oxide, or oxyhydroxide.

According to the present invention, the aluminum-containing raw material may be at least one selected from aluminum hydroxide, aluminum oxide, aluminum sulfate, aluminum acetate, aluminum nitrate, aluminum halide, aluminum sulfide, and aluminum oxyhydroxide. The aluminum-containing raw material may specifically be aluminum hydroxide, aluminum oxide, or a combination thereof, and may more specifically be aluminum hydroxide.

According to the present invention, the aluminum-containing raw material may be added such that an amount of aluminum is 1,000 ppm to 9,000 ppm, specifically, 1,000 ppm, 1,500 ppm, 2,000 ppm or more, 7,000 ppm, 8,000 ppm, or 9,000 ppm or less based on a total weight of the lithium composite transition metal oxide. In this case, since a side reaction between the resulting positive electrode active material and an electrolyte solution may be reduced, degradation of the positive electrode active material may be suppressed.

The mixing of the composite transition metal hydroxide containing zirconium, the lithium-containing raw material, and the aluminum-containing raw material may be performed by solid-phase mixing. In addition, a mixing ratio of the composite transition metal hydroxide to the lithium-containing raw material may be determined within a range that satisfies the atomic fraction of each component in the finally prepared positive electrode active material. For example, the composite transition metal hydroxide and the lithium-containing raw material may be mixed in amounts such that a molar ratio of transition metal:Li is in a range of 1:0.9 to 1:1.2, specifically, 1:0.95 to 1:1.1. In a case in which the composite transition metal hydroxide and the lithium-containing raw material are mixed in the above range, a positive electrode active material exhibiting excellent capacity characteristics may be prepared.

According to the present invention, the sintering of step (B) may be performed at a temperature of 680°C to 900°C, specifically, 680°C, 690°C, 700°C or more, 870°C, 880°C, 890°C, 900°C or less. In this case, a positive electrode active material exhibiting excellent capacity characteristics may be prepared.

The sintering may be performed in an oxygen atmosphere for a stable reaction between lithium and transition metal, particularly, nickel and the formation of a stable structure.

The sintering may be performed for 15 hours, 17 hours, 20 hours or more, 30 hours, 33 hours, or 35 hours or less. In this case, since a layered structure may be stably formed, a positive electrode active material exhibiting excellent capacity characteristics may be prepared.

As a result, the lithium composite transition metal oxide prepared according to step (B) may have a composition represented by Formula 2 below.

[Formula 2] Li₁₊ₓNiₐ₂Co_{b2}Mn_{c2}Zr_{d2}Alₑ₂M²_{f2}O₂

In Formula 2,
M² is at least one selected from B, W, Mg Ce, Hf, Ta, La, Ti, Sr, Ba, Ce, Hf, F, P, S, and La, and
0.60≤a2<1.0, 0<b2≤0.40, 0<c2≤0.40, 0<d2≤0.10, 0<e2≤0.10, 0≤f2≤0.10, and a2+b2+c2+d2+e2+f2=1.
a2 represents an atomic fraction of nickel among metallic elements in the lithium composite transition metal oxide, wherein a2 may be 0.60, 0.70, 0.80, 0.85 or more, 0.95, or 0.98 or less.
b2 represents an atomic fraction of cobalt among the metallic elements in the lithium composite transition metal oxide, wherein b2 may be 0.01, 0.02, 0.03 or more, 0.10, 0.30, or 0.40 or less.
c2 represents an atomic fraction of manganese among the metallic elements in the lithium composite transition metal oxide, wherein c2 may be 0.01, 0.02, 0.03 or more, 0.10, 0.30, or 0.40 or less.
d2 represents an atomic fraction of zirconium among the metallic elements in the lithium composite transition metal oxide, wherein d2 may be greater than 0, 0.01 or more, 0.02, 0.05, or 0.10 or less.
e2 represents an atomic fraction of aluminum among the metallic elements in the lithium composite transition metal oxide, wherein e2 may be greater than 0, 0.01 or more, 0.02, 0.05, or 0.10 or less.
f2 represents an atomic fraction of element M² among the metallic elements in the lithium composite transition metal oxide, wherein f2 may be 0, 0.01 or more, 0.02, 0.05, or 0.10 or less.

### Step (C)

The method of preparing a positive electrode active material according to the present invention may further include the step of: (C) forming a coating layer by mixing a coating element-containing raw material with the lithium composite transition metal oxide and performing a heat treatment.

A metallic element included in the coating element-containing raw material may be B, W, molybdenum (Mo), chromium (Cr), niobium (Nb), Mg, Hf, Ta, La, Ti, Sr, Ba, Ce, F, P, S, and yttrium (Y). The coating element-containing raw material may be an acetate, nitrate, sulfate, halide, sulfide, hydroxide, oxide, or oxyhydroxide containing the metallic element. For example, in a case in which the metallic element is B, boric acid (H₃BO₃) or the like may be used.

The coating element-containing raw material may be included in a weight of 200 ppm to 2,000 ppm based on the lithium transition metal oxide. In a case in which the amount of the coating element-containing raw material is within the above range, capacity of the battery may be improved, and long-term performance characteristics of the battery may be improved by suppressing a direct reaction between the electrolyte solution and the lithium transition metal oxide by the coating layer formed.

The heat treatment of step (C) may be performed at a temperature of 200°C to 400°C. In a case in which the heat-treatment temperature is within the above range, a coating layer may be formed while maintaining structural stability of the transition metal oxide. The heat treatment of step (C) may be performed for 1 hour to 10 hours. In a case in which the heat-treatment time is within the above range, an appropriate coating layer may be formed and production efficiency may be improved.

### Positive Electrode Active Material

The present invention provides a positive electrode active material including a lithium composite transition metal oxide which includes zirconium, aluminum, and at least one selected from nickel, cobalt, and manganese,

wherein a weight ratio of aluminum present in inside to aluminum present on a surface is greater than 1.0, and
a weight ratio of zirconium present in the inside to zirconium present on the surface is greater than 1.0.

The positive electrode active material according to the present invention may be prepared by the above-described method of preparing a positive electrode active material. In addition, the lithium composite transition metal oxide may have the composition represented by Formula 2. The surface may be a region within 1 µm from the outermost portion of the lithium composite transition metal oxide.

Since the lithium composite transition metal oxide includes both zirconium and aluminum, the structural stability is not only improved, but it may also act as an HF scavenger, the life characteristics, resistance characteristics, and thermal stability of the battery may all be improved. In a case in which the lithium composite transition metal oxide does not include zirconium, there is a problem in that life and storage characteristics are degraded due to a decrease in structural stability, and, in a case in which the lithium composite transition metal oxide does not include aluminum, there are problems, such as a decrease in thermal stability, a decrease in life characteristics, and an increase in resistance of the battery, due to degradation such as an increase in side reaction.

If the weight ratio of the aluminum present in the inside to the aluminum present on the surface is greater than 1.0, the side reaction with the electrolyte solution is decreased to improve the cycle characteristics, but, if the weight ratio is 1.0 or less, the degradation of the positive electrode active material is accelerated by the side reaction with the electrolyte solution, and, as a result, there is a problem in that the cycle characteristics are degraded.

If the weight ratio of the zirconium present in the inside to the zirconium present on the surface is greater than 1.0, it contributes to lattice stabilization to improve the cycle characteristics, but, if the weight ratio is 1.0 or less, there is a problem in that zirconium oxide present on the surface is increased to increase resistance.

According to the present invention, the lithium composite transition metal oxide may include zirconium in an amount of 1,000 ppm to 9,000 ppm, specifically, 1,000 ppm, 1,500 ppm, 2,000 ppm or more, 7,000 ppm, 8,000 ppm, or 9,000 ppm or less. In this case, the life characteristics may be improved due to an increase in structural stability.

According to the present invention, the lithium composite transition metal oxide may include aluminum in an amount of 1,000 ppm to 9,000 ppm, specifically, 1,000 ppm, 1,500 ppm, 2,000 ppm or more, 7,000 ppm, 8,000 ppm, or 9,000 ppm or less. In this case, the degradation of the positive electrode active material may be suppressed due to a decrease in the side reaction with the electrolyte solution.

According to the present invention, the lithium composite transition metal oxide may have a composition represented by Formula 2 below.

[Formula 2] Li₁₊ₓNiₐ₂Co_{b2}Mn_{c2}Zr_{d2}Alₑ₂M²_{f2}O₂

In Formula 2,
M² is at least one selected from B, W, Mg Ce, Hf, Ta, La, Ti, Sr, Ba, Ce, Hf, F, P, S, and La, and
0.60≤a2<1.0, 0<b2≤0.40, 0<c2≤0.40, 0<d2≤0.10, 0<e2≤0.10, 0≤f2≤0.10, and a2+b2+c2+d2+e2+f2=1.
a2 represents an atomic fraction of nickel among metallic elements in the lithium composite transition metal oxide, wherein a2 may be 0.60, 0.70, 0.80, 0.85 or more, 0.95, or 0.98 or less.
b2 represents an atomic fraction of cobalt among the metallic elements in the lithium composite transition metal oxide, wherein b2 may be 0.01, 0.02, 0.03 or more, 0.10, 0.30, or 0.40 or less.
c2 represents an atomic fraction of manganese among the metallic elements in the lithium composite transition metal oxide, wherein c2 may be 0.01, 0.02, 0.03 or more, 0.10, 0.30, or 0.40 or less.
d2 represents an atomic fraction of zirconium among the metallic elements in the lithium composite transition metal oxide, wherein d2 may be greater than 0, 0.01 or more, 0.02, 0.05, or 0.10 or less.
e2 represents an atomic fraction of aluminum among the metallic elements in the lithium composite transition metal oxide, wherein e2 may be greater than 0, 0.01 or more, 0.02, 0.05, or 0.10 or less.
f2 represents an atomic fraction of element M² among the metallic elements in the lithium composite transition metal oxide, wherein f2 may be 0, 0.01 or more, 0.02, 0.05, or 0.10 or less.

According to the present invention, the positive electrode active material may have an average particle diameter (D₅₀) of 3 µm to 20 µm, specifically, 3 µm, 4 µm, 5 µm, 6 µm, 7 µm, 8 µm, 9 µm, 10 µm or more, 15 µm, 16 µm, 17 µm, 18 µm, 19 µm, or 20 µm or less. In this case, the performance of the battery may be further improved.

### Positive Electrode

Also, the present invention may provide a positive electrode for a lithium secondary battery which includes the above-described positive electrode active material.

Specifically, the positive electrode includes a positive electrode collector, and a positive electrode active material layer which is disposed on at least one surface of the positive electrode collector and includes the above-described positive electrode active material.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may include a conductive agent and a binder together with the positive electrode active material.

In this case, the positive electrode active material may be included in an amount of 80 wt% to 99 wt%, more specifically, 85 wt% to 98 wt% based on a total weight of the positive electrode active material layer. When the positive electrode active material is included in an amount within the above range, excellent capacity characteristics may be obtained.

In this case, the conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 1 wt% to 30 wt% based on the total weight of the positive electrode active material layer.

The binder improves the adhesion between the positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be prepared according to a typical method of preparing a positive electrode except that the above-described positive electrode active material is used. Specifically, a positive electrode material mixture, which is prepared by dissolving or dispersing the positive electrode active material as well as optionally the binder and the conductive agent in a solvent, is coated on the positive electrode collector, and the positive electrode may then be prepared by drying and rolling the coated positive electrode collector. In this case, types and amounts of the positive electrode active material, the binder, and the conductive agent are the same as those previously described. Also, as another method, the positive electrode may be prepared by casting the positive electrode material mixture on a separate support and then laminating a film separated from the support on the positive electrode collector.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

### Lithium Secondary Battery

Furthermore, in the present invention, an electrochemical device including the positive electrode may be prepared. The electrochemical device may specifically be a battery or a capacitor, and may more specifically be a lithium secondary battery.

The lithium secondary battery specifically includes a positive electrode, a negative electrode disposed to face the positive electrode, a separator disposed between the positive electrode and the negative electrode, and an electrolyte, and, since the positive electrode is the same as described above, detailed descriptions thereof will be omitted and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 µm to 500 µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder may typically be added in an amount of 0.1 wt% to 10 wt% based on the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber, a nitrile-butadiene rubber, a fluoro rubber, and various copolymers thereof.

The conductive agent is a component for further improving conductivity of the negative electrode active material, wherein the conductive agent may be added in an amount of 10 wt% or less, preferably, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

The negative electrode active material layer may be prepared by coating a negative electrode material mixture, which is prepared by dissolving or dispersing optionally the binder and the conductive agent as well as the negative electrode active material in a solvent, on the negative electrode collector and drying the coated negative electrode collector, or may be prepared by casting the negative electrode material mixture on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions is preferable. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 2.0 M. Since the electrolyte may have appropriate conductivity and viscosity when the concentration of the lithium salt is included within the above range, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% based on a total weight of the electrolyte.

As described above, since the lithium secondary battery including the positive electrode active material according to the present invention exhibits high initial efficiency, low initial resistance, excellent cycle characteristics, and thermal stability, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Examples and Comparative Examples

### Example 1

NiSO₄, CoSO₄, MnSO₄, and Zr(SO₄)₂ were mixed in deionized water in amounts such that a molar ratio of nickel:cobalt:manganese:zirconium was 93.6:2:4:0.4 to prepare a transition metal aqueous solution with a concentration of 2.4 M. Also, a NaOH aqueous solution with a concentration of 25 wt% and a NH₄OH aqueous solution with a concentration of 9 wt% were prepared. For reference, the Zr(SO₄)₂ was added such that an amount of zirconium was 4,500 ppm based on a total weight of a positive electrode active material precursor to be prepared.

After 82.8 L of deionized water was put into a reactor, dissolved oxygen in the water was removed by purging the reactor with nitrogen gas at a rate of 20 L/min to create a non-oxidizing atmosphere in the reactor. Thereafter, after adding 158 mL of the NaOH aqueous solution and 6,812 mL of the NH₄OH aqueous solution, the mixture was stirred at a stirring speed of 250 rpm at 50°C to adjust a pH in the reactor to a range of 12.0 to 12.2.

Thereafter, while stirring at a stirring speed of 650 rpm, a co-precipitation reaction was performed at 50°C and a pH of 11.6 for 48 hours while the transition metal aqueous solution, the NaOH aqueous solution, and the NH₄OH aqueous solution were continuously added at rates of 23.9 L/hr, 14.4 L/hr, and 3.38 L/hr, respectively, to prepare a positive electrode active material precursor having a composition of Ni_{0.936}Co_{0.02}Mn_{0.04}Zr_{0.004}(OH)₂.

The positive electrode active material precursor, LiOH, and Al(OH)₃ were mixed in a molar ratio of 1:1.05:0.015 and sintered at 755°C for 27 hours in an oxygen atmosphere to prepare a positive electrode active material (average particle diameter (D₅₀): 13 µm). In this case, the positive electrode active material included 4,000 ppm of zirconium and 4,000 ppm of aluminum based on a total weight.

### Example 2

NiSO₄, CoSO₄, MnSO₄, and Zr(SO₄)₂ were mixed in deionized water in amounts such that a molar ratio of nickel:cobalt:manganese:zirconium was 94.6:2:3:0.4 to prepare a transition metal aqueous solution with a concentration of 2.4 M. Also, a NaOH aqueous solution with a concentration of 25 wt% and a NH₄OH aqueous solution with a concentration of 9 wt% were prepared. For reference, the Zr(SO₄)₂ was added such that an amount of zirconium was 4,500 ppm based on a total weight of a positive electrode active material precursor to be prepared.

After 82.8 L of deionized water was put into a reactor, dissolved oxygen in the water was removed by purging the reactor with nitrogen gas at a rate of 20 L/min to create a non-oxidizing atmosphere in the reactor. Thereafter, after adding 158 mL of the NaOH aqueous solution and 6,812 mL of the NH₄OH aqueous solution, the mixture was stirred at a stirring speed of 250 rpm at 50°C to adjust a pH in the reactor to a range of 12.0 to 12.2.

Thereafter, while stirring at a stirring speed of 650 rpm, a co-precipitation reaction was performed at 50°C and a pH of 11.6 for 48 hours while the transition metal aqueous solution, the NaOH aqueous solution, and the NH₄OH aqueous solution were continuously added at rates of 23.9 L/hr, 14.4 L/hr, and 3.38 L/hr, respectively, to prepare a positive electrode active material precursor having a composition of Ni_{0.946}Co_{0.02}Mn_{0.03}Zr_{0.004}(OH)₂.

The positive electrode active material precursor, LiOH, and Al(OH)₃ were mixed in a molar ratio of 1:1.05:0.015 and sintered at 735°C for 27 hours in an oxygen atmosphere to prepare a positive electrode active material (average particle diameter (D₅₀): 15 µm). In this case, the positive electrode active material included 4,000 ppm of zirconium and 4,000 ppm of aluminum based on a total weight.

### Example 3

A positive electrode active material precursor having a composition of Ni_{0.936}Co_{0.02}Mn_{0.04}Zr_{0.004}(OH)₂ was prepared in the same manner as in Example 1.

The positive electrode active material precursor, LiOH, and Al(OH)₃ were mixed in a molar ratio of 1:1.05:0.010 and sintered at 755°C for 27 hours in an oxygen atmosphere to prepare a positive electrode active material (average particle diameter (D₅₀): 13 µm). In this case, the positive electrode active material included 4,000 ppm of zirconium and 2,500 ppm of aluminum based on a total weight.

### Comparative Example 1

NiSO₄, CoSO₄, and MnSO₄ were mixed in deionized water in amounts such that a molar ratio of nickel:cobalt:manganese was 94:2:4 to prepare a transition metal aqueous solution with a concentration of 2.4 M. Also, a NaOH aqueous solution with a concentration of 25 wt% and a NH₄OH aqueous solution with a concentration of 9 wt% were prepared.

After 82.8 L of deionized water was put into a reactor, dissolved oxygen in the water was removed by purging the reactor with nitrogen gas at a rate of 20 L/min to create a non-oxidizing atmosphere in the reactor. Thereafter, after adding 158 mL of the NaOH aqueous solution and 6,812 mL of the NH₄OH aqueous solution, the mixture was stirred at a stirring speed of 250 rpm at 50°C to adjust a pH in the reactor to a range of 12.0 to 12.2.

Thereafter, while stirring at a stirring speed of 650 rpm, a co-precipitation reaction was performed at 50°C and a pH of 11.6 for 48 hours while the transition metal aqueous solution, the NaOH aqueous solution, and the NH₄OH aqueous solution were continuously added at rates of 23.9 L/hr, 14.4 L/hr, and 3.38 L/hr, respectively, to prepare a positive electrode active material precursor having a composition of Ni_{0.94}CO_{0.02}Mn_{0.04}(OH)₂.

The positive electrode active material precursor, LiOH, Al(OH)₃, and ZrO₂ were mixed in a molar ratio of 1:1.05:0.015:0.004 and sintered at 755°C for 27 hours in an oxygen atmosphere to prepare a positive electrode active material (average particle diameter (D₅₀): 13 µm). In this case, the positive electrode active material included 4,000 ppm of zirconium and 4,000 ppm of aluminum based on a total weight.

### Comparative Example 2

NiSO₄, CoSO₄, and MnSO₄ were mixed in deionized water in amounts such that a molar ratio of nickel:cobalt:manganese was 95:2:3 to prepare a transition metal aqueous solution with a concentration of 2.4 M. Also, a NaOH aqueous solution with a concentration of 25 wt% and a NH₄OH aqueous solution with a concentration of 9 wt% were prepared.

After 82.8 L of deionized water was put into a reactor, dissolved oxygen in the water was removed by purging the reactor with nitrogen gas at a rate of 20 L/min to create a non-oxidizing atmosphere in the reactor. Thereafter, after adding 158 mL of the NaOH aqueous solution and 6,812 mL of the NH₄OH aqueous solution, the mixture was stirred at a stirring speed of 250 rpm at 50°C to adjust a pH in the reactor to a range of 12.0 to 12.2.

Thereafter, while stirring at a stirring speed of 650 rpm, a co-precipitation reaction was performed at 50°C and a pH of 11.6 for 48 hours while the transition metal aqueous solution, the NaOH aqueous solution, and the NH₄OH aqueous solution were continuously added at rates of 23.9 L/hr, 14.4 L/hr, and 3.38 L/hr, respectively, to prepare a positive electrode active material precursor having a composition of Ni_{0.95}Co_{0.o2}Mn_{0.03}(OH)₂.

The positive electrode active material precursor, LiOH, Al(OH)₃, and ZrO₂ were mixed in a molar ratio of 1:1.05:0.015:0.004 and sintered at 735°C for 27 hours in an oxygen atmosphere to prepare a positive electrode active material (average particle diameter (D₅₀): 15 µm). In this case, the positive electrode active material included 4,000 ppm of zirconium and 4,000 ppm of aluminum based on a total weight.

### Comparative Example 3

A positive electrode active material precursor having a composition of Ni_{0.936}Co_{0.02}Mn_{0.04}Zr_{0.004}(OH)₂ was prepared in the same manner as in Example 1.

The positive electrode active material precursor and LiOH were mixed in a molar ratio of 1:1.05 and sintered at 755°C for 27 hours in an oxygen atmosphere to prepare a positive electrode active material (average particle diameter (D₅₀): 13 µm). In this case, the positive electrode active material included 4,000 ppm of zirconium based on a total weight.

### Comparative Example 4

NiSO₄, CoSO₄, MnSO₄, and AlSO₄ were mixed in deionized water in amounts such that a molar ratio of nickel:cobalt:manganese:aluminum was 92.5:2:6:1.5 to prepare a transition metal aqueous solution with a concentration of 2.4 M. Also, a NaOH aqueous solution with a concentration of 25 wt% and a NH₄OH aqueous solution with a concentration of 9 wt% were prepared. For reference, the AlSO₄ was added such that an amount of aluminum was 4,000 ppm based on a total weight of a positive electrode active material precursor to be prepared.

After 82.8 L of deionized water was put into a reactor, dissolved oxygen in the water was removed by purging the reactor with nitrogen gas at a rate of 20 L/min to create a non-oxidizing atmosphere in the reactor. Thereafter, after adding 158 mL of the NaOH aqueous solution and 6,812 mL of the NH₄OH aqueous solution, the mixture was stirred at a stirring speed of 250 rpm at 50°C to adjust a pH in the reactor to a range of 12.0 to 12.2.

Thereafter, while stirring at a stirring speed of 650 rpm, a co-precipitation reaction was performed at 50°C and a pH of 11.6 for 48 hours while the transition metal aqueous solution, the NaOH aqueous solution, and the NH₄OH aqueous solution were continuously added at rates of 23.9 L/hr, 14.4 L/hr, and 3.38 L/hr, respectively, to prepare a positive electrode active material precursor having a composition of Ni_{0.925}Co_{0.02}Mn_{0.04}Al_{0.015}(OH)₂.

The positive electrode active material precursor, LiOH, and ZrO₂ were mixed in a molar ratio of 1:1.05:0.004 and sintered at 755°C for 27 hours in an oxygen atmosphere to prepare a positive electrode active material (average particle diameter (D₅₀): 13 µm). In this case, the positive electrode active material included 4,000 ppm of zirconium and 4,000 ppm of aluminum based on a total weight.

### Experimental Examples

### Experimental Example 1: Compositional Analysis of Surface and Inside of Positive Electrode Active Material

Amounts (wt%) of Al and Zr elements present in the inside and surface of each of the positive electrode active materials of Example 1, Comparative Example 1, and Comparative Example 4 were confirmed by using an EPMA (Electron Probe MicroAnalyzer) (JXA-8350F, JEOL Ltd.) (accelerating voltage: 15 kV, probe current: 100 nA), and the results thereof are presented in Table 1. When the amounts of the Al and Zr elements present in the inside of the positive electrode active material were confirmed, the positive electrode active material was cut by ion milling (IM4000, HITACHI), and a cross section was then analyzed.

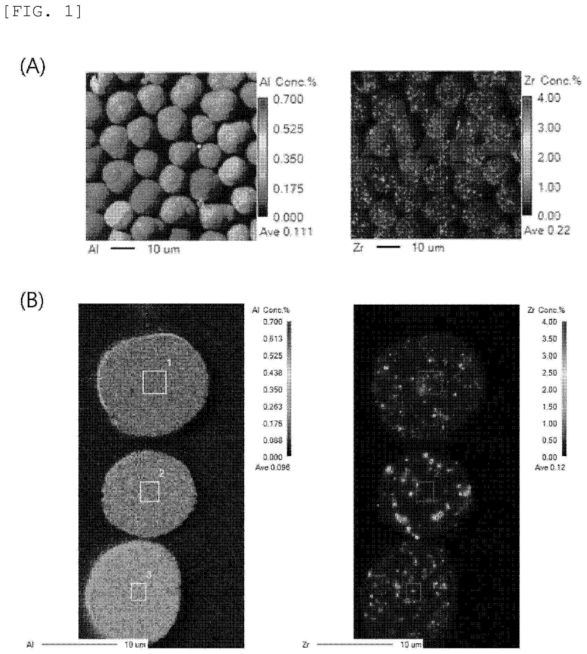

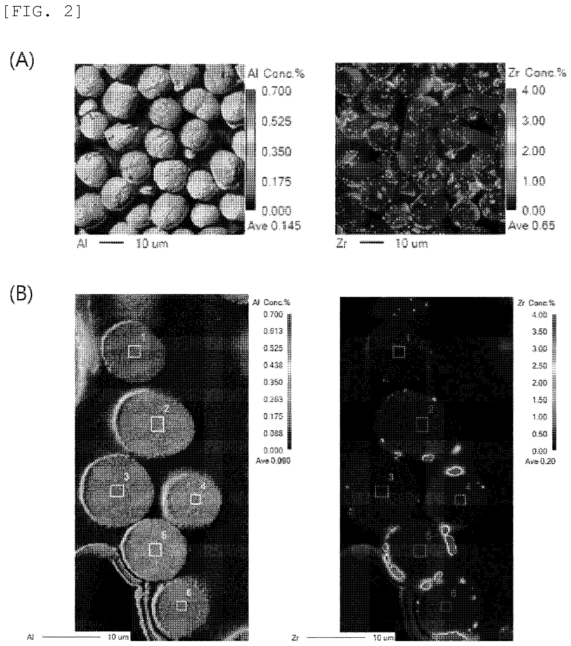

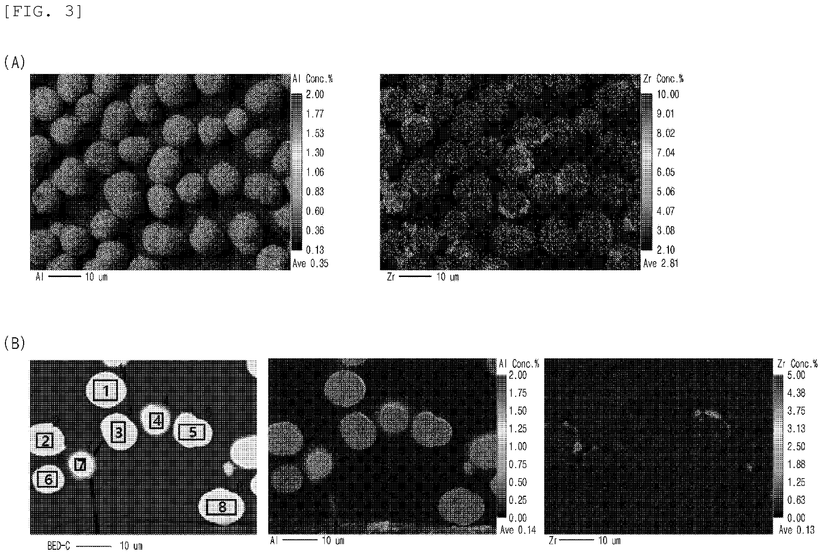

Specifically, the amounts of the elements present on the surface of each of the positive electrode active materials of Example 1, Comparative Example 1, and Comparative Example 4 were values obtained by EPMA mapping of an entire surface image of the positive electrode active material of Example 1 in FIG. 1(A), values obtained by EPMA mapping of an entire surface image of the positive electrode active material of Comparative Example 1 in FIG. 2(A), and values obtained by EPMA mapping of an entire surface image of the positive electrode active material of Comparative Example 4 in FIG. 3(A). In addition, the amounts of the elements present in the inside of each of the positive electrode active materials of Example 1, Comparative Example 1, and Comparative Example 4 were an average value of values obtained by EPMA mapping of the inside of each of red squares in a cross-sectional image of the positive electrode active material of Example 1 in FIG. 1(B), an average value of values obtained by EPMA Mapping of the inside of each of squares 1 to 6 in a cross-sectional image of the positive electrode active material of Comparative Example 1 in FIG. 2(B), and an average value of values obtained by EPMA Mapping of the inside of each of squares 1 to 8 in a cross-sectional image of the positive electrode active material of Comparative Example 4 in FIG. 3(B).

FIG. 1(A) is an EPMA mapping image of the surface of the positive electrode active material of Example 1, and FIG. 1(B) is an EPMA mapping image of the cross-section of the positive electrode active material of Example 1. FIG. 2(A) is an EPMA mapping image of the surface of the positive electrode active material of Comparative Example 1, and FIG. 2(B) is an EPMA mapping image of the cross-section of the positive electrode active material of Comparative Example 1. In addition, FIG. 3(A) is an EPMA mapping image of the surface of the positive electrode active material of Comparative Example 4, and FIG. 3(B) is an EPMA mapping image of the cross-section of the positive electrode active material of Comparative Example 4.

**[Table 1]**

| | Example 1 | | Comparative Example 1 | | Comparative Example 4 | |
|---|---|---|---|---|---|---|
| | Al | Zr | Al | Zr | Al | Zr |
| Surface | 0.111wt% | 0.22wt% | 0.145wt% | 0.65wt% | 0.35wt% | 2.81wt% |
| Inside | 0.19wt% | 0.29wt% | 0.16wt% | 0.16wt% | 0.37wt% | 0.26wt% |
| Inside/ Surface | 1.711712 | 1.318182 | 1.103448 | 0.246154 | 1.057143 | 0.092527 |

Referring to FIGS. 1 to 3 and Table 1, it may be confirmed that the positive electrode active material of Example 1 had less zirconium that was present in an agglomerated state on the surface, and the amount of each of the aluminum and zirconium present in the inside was higher than the amount of each of the aluminum and zirconium present on the surface. In contrast, it may be confirmed that the positive electrode active materials of Comparative Examples 1 and 4 had a large amount of zirconium that was present in an agglomerated state on the surface, and larger amounts of the aluminum and zirconium elements than those of the example were present on the surfaces of the positive electrode active materials.

### Experimental Example 2: Battery Performance Evaluation

Lithium secondary batteries were prepared using the positive electrode active materials prepared in Examples 1 to 3 and Comparative Examples 1 to 4, and initial efficiency, initial resistance (DCIR), capacity retention, resistance increase rate, and DSC onset temperature were evaluated for each lithium secondary battery.

Specifically, a positive electrode slurry was prepared by mixing each of the positive electrode active materials prepared in Examples 1 to 3 and Comparative Examples 1 to 4, a SuperC 65 conductive agent, and a KF1120 binder in an N-methylpyrrolidone (NMP) solvent at a weight ratio of 96.5:1.5:2.0. One surface of an aluminum current collector was coated with the positive electrode slurry, dried at 130°C, and then rolled to prepare a positive electrode. A lithium (Li) metal disk was used as a negative electrode active material. After an electrode assembly was prepared by disposing a separator between the above-prepared positive electrode and negative electrode, each lithium secondary battery was prepared by disposing the electrode assembly in a battery case, and then injecting an electrolyte solution into the battery case. In this case, as the electrolyte solution, an electrolyte solution, in which 1 M LiPF₆ was dissolved in an organic solvent of EC/EMC/DMC (3/3/4, vol%), was injected to prepare the lithium secondary battery.

Each lithium secondary battery prepared as described above was charged at a constant current of 0.2 C to 4.25 V at 25°C and discharged at a constant current of 0.2 C to 2.5 V to obtain initial charge capacity and initial discharge capacity, and a percentage of the initial discharge capacity to the initial charge capacity was set as an initial efficiency (%), and the initial efficiencies are presented in Table 2 below. In this case, current and voltage at 60 seconds after the start of the discharge were measured, and an initial resistance value was calculated through the formula of R=I/V and presented in Table 2 below.

Also, charging of each lithium secondary battery prepared as described above at a constant current of 0.33 C to 4.25 V at 45°C and discharging of each lithium secondary battery at a constant current of 0.33 C to 2.5 V were set as one cycle, 30 cycles were repeated, a percentage of discharge capacity in a 30^{th} cycle to discharge capacity in a first cycle was set as a capacity retention (%) and presented in Table 2 below, and resistance in the 30^{th} cycle to resistance in the first cycle was set as a resistance increase rate (%) and presented in Table 2 below. For reference, current and voltage at 60 seconds after the start of the discharge of each cycle were measured, and a resistance value was obtained by calculating through the formula of R=I/V.

In addition, thermal stability was evaluated as follows. Specifically, after each lithium secondary battery prepared as described above was charged at a constant current of 0.2 C to 4.25 V at 25°C, discharged at a constant current of 0.2 C to 2.5 V, and then charged again at a constant current of 0.2 C to 4.25 V, each lithium secondary battery was disassembled to separate only the positive electrode, the positive electrode was disposed in a battery case for DSC, and an electrolyte solution, in which 1M LiPF₆ was dissolved in an organic electrolyte (EC/EMC/DMC (3/3/4, vol%), was added into the battery case for DSC such that an amount of the electrolyte solution was 30 parts by weight based on 100 parts by weight of the total positive electrode to prepare a battery for DSC. The thermal stability evaluation was performed by increasing the temperature from 25°C to 400°C at a rate of 10°C/min, a highest value of a first exothermic peak appeared while heating was set as an onset peak, and an onset temperature (Onset Temp.) is presented in Table 2 below.

**[Table 2]**

| | Initial efficienc y (%) | Initial resistanc e (Ω) | Capacity retention (%) | Resistanc e increase rate (%) | DSC onset Temp. (°C) |
|---|---|---|---|---|---|
| Example 1 | 88.9 | 26.6 | 94.1 | 93.4 | 215 |
| Example 2 | 89.6 | 24.6 | 92.7 | 119.3 | 212 |
| Example 3 | 89.0 | 26.5 | 93.7 | 104.3 | 212 |
| Comparative Example 1 | 88.6 | 27.9 | 93.7 | 119.4 | - |
| Comparative Example 2 | 88.8 | 27.2 | 92.8 | 135.6 | - |
| Comparative Example 3 | 90.0 | 28.6 | 92.8 | 123.0 | 208 |
| Comparative | 88.7 | 27.1 | 93.7 | 105.2 | - |
| Example 4 | | | | | |

Referring to Table 2, it may be confirmed that the batteries including the positive electrode active materials of Examples 1 to 3 had high initial efficiency, low initial resistance, and excellent cycle characteristics and thermal stability. Specifically, it may be confirmed that the battery including the positive electrode active material of Example 1 had higher initial efficiency, lower initial resistance, and lower resistance increase rate than the batteries including the positive electrode active materials of Comparative Examples 1 and 4 in which a doping method was only different. Also, it may be confirmed that the battery including the positive electrode active material of Example 2 had higher initial efficiency, lower initial resistance, and lower resistance increase rate than the battery including the positive electrode active material of Comparative Example 2 in which a doping method was only different.

The reason for this is that, in a case in which zirconium was first doped into the composite transition metal hydroxide precursor as in the method of preparing a positive electrode active material according to the present invention, that is, in a case in which zirconium was first doped during the preparation of the composite transition metal hydroxide, since not only the distribution of zirconium but also the distribution of aluminum, which was added in the step of mixing the precursor and the lithium-containing raw material and sintering the mixture, may be controlled, a positive electrode active material, in which a weight ratio of the aluminum present in the inside to the aluminum present on the surface was greater than 1.0 and a weight ratio of the zirconium present in the inside to the zirconium present on the surface was greater than 1.0, was prepared as a result.

## Claims

1. A method of preparing a positive electrode active material, the method comprising steps of:
(A) preparing a composite transition metal hydroxide containing zirconium by a co-precipitation reaction while adding a transition metal-containing solution containing at least one selected from nickel, cobalt, and manganese, a zirconium-containing raw material, an ammonium cationic complexing agent, and a basic solution into a reactor; and
(B) preparing a lithium composite transition metal oxide by mixing the composite transition metal hydroxide containing zirconium with a lithium-containing raw material and an aluminum-containing raw material and sintering the mixture,
wherein the lithium composite transition metal oxide comprises zirconium, aluminum, and at least one selected from nickel, cobalt, and manganese.

2. The method of claim 1, wherein the zirconium-containing raw material is at least one selected from zirconium hydroxide, zirconium sulfate, zirconium acetate, zirconium nitrate, zirconium halide, zirconium sulfide, and zirconium oxyhydroxide.

3. The method of claim 1, wherein the zirconium-containing raw material is added such that an amount of the zirconium is 1,000 ppm to 9,000 ppm based on a total weight of the composite transition metal hydroxide containing zirconium.

4. The method of claim 1, wherein the aluminum-containing raw material is at least one selected from aluminum hydroxide, aluminum oxide, aluminum sulfate, aluminum acetate, aluminum nitrate, aluminum halide, aluminum sulfide, and aluminum oxyhydroxide.

5. The method of claim 1, wherein the aluminum-containing raw material is added such that an amount of the aluminum is 1,000 ppm to 9,000 ppm based on a total weight of the lithium composite transition metal oxide.

6. The method of claim 1, wherein the sintering of step (B) is performed at a temperature of 700°C to 800°C.

7. A positive electrode active material comprising a lithium composite transition metal oxide which includes zirconium, aluminum, and at least one selected from nickel, cobalt, and manganese,
wherein a weight ratio of the aluminum present in inside to the aluminum present on a surface is greater than 1.0, and
a weight ratio of the zirconium present in the inside to the zirconium present on the surface is greater than **1.0.**

8. The positive electrode active material of claim **7,** wherein the lithium composite transition metal oxide comprises the zirconium in an amount of 1,000 ppm to 9,000 ppm based on a total weight.

9. The positive electrode active material of claim **7,** wherein the lithium composite transition metal oxide comprises the aluminum in an amount of 1,000 ppm to 9,000 ppm based on a total weight.

10. The positive electrode active material of claim **7,** wherein the positive electrode active material has an average particle diameter (D₅₀) of 3 µm to 20 µm.

11. A positive electrode comprising the positive electrode active material of any one of claims 7 to 10.

12. A lithium secondary battery comprising the positive electrode of claim 11.
